# EUROPEAN PATENT SPECIFICATION

(11) **EP 4 000 865 B1**
(45) Date of publication and mention of the grant of the patent: **12.03.2025**
(21) Application number: 20209065.0
(22) Date of filing: 20.11.2020
(51) Int. Cl.: B29C 64/106, B29C 64/393, B33Y 10/00, B33Y 50/02, G06N 3/00, G06N 3/08, G06N 3/045

(54) **A SYSTEM AND METHOD FOR EXTRUSION BASED MANUFACTURING OF A STRUCTURE**
SYSTEM UND VERFAHREN ZUR EXTRUSIONSBASIERTEN HERSTELLUNG EINER STRUKTUR
SYSTÈME ET PROCÉDÉ DE FABRICATION D'UNE STRUCTURE PAR EXTRUSION

(43) Date of publication of application: 25.05.2022
(73) Proprietor: VITO NV, 2400 Mol (BE)
(72) Inventor: MICHIELSEN, Bart, B-2400 Mol (BE); LEFEVER, Jasper, B-2400 Mol (BE); VANGENEUGDEN, Dirk, B-2400 Mol (BE)
(74) Representative: V.O.

(56) References cited:
- WO-A1-2020/068399
- WO-A2-2017/106787
- DE-A1- 102016 222 566
- GB-A- 2 572 327

## Description

### FIELD OF THE INVENTION

The invention relates to a system for manufacturing a three-dimensional structure with interconnected filaments. The invention further relates to a method for controlling a system arranged for manufacturing a three-dimensional structure with interconnected filaments.

### BACKGROUND TO THE INVENTION

Additive manufacturing is currently widely used and various techniques exist. It can help building a structure layer-by-layer and the manufactured structure can be employed in various application.

Extrusion-based additive manufacturing methods have been employed for fabrication of structures. A material (e.g. paste, polymers, hydrogels, etc.) is extruded through a nozzle in the form of filaments. A certain arrangement of filaments can be obtained by relative movement of the nozzle with respect to a print bed during deposition. During the material extrusion, filaments are extruded from a nozzle and positioned relative to one another according to a predetermined pattern providing the desired properties of the manufactured structure. The lay-down pattern is determined by the print path which can be different for different structures to be manufactured. The structures may have complex geometries with a fully interconnected network of pores which may be required for some applications.

The printing process may not always result in a desired structure. The printed structure may not have the desired characteristics as a result of non-optimal deposition control parameters resulting in e.g. abnormalities or deviations during the printing process. In some cases, a deposition quality may by different for each nozzle diameter. Also the design of the structure being manufactured may influence the deposition quality. Moreover, also the build material used (e.g. paste composition) may result in different deposition qualities.

There is a need for improving the efficiency of the extrusion based printing of the structure while guaranteeing the print quality and/or one or more properties (e.g. structural integrity, porosity, etc.) of the manufactured structure.

It is desired to be able to efficiently produce custom designed structures with great accuracy and reproducibility using extrusion-based printing processes. Also the mechanical and porous characteristics of the printed structures may be rather difficult to predict.

The existing systems and methods can be cumbersome and difficult to implement in the field, often requiring a human operator to adjust or finetune one or more operational parameters. There is a need for improving the printing process of structures manufactured by an extrusion based printing process. Additionally, there is a desire for a system and method which is less complex, intrusive and/or expensive. Furthermore, it is desired to enhance the printing quality and suitability for printing structures for a wider range of applications.

GB2572327 discloses a system in which a material to be extruded is contained within a feed system characterised by one or more material reservoirs or feed hoppers. Materials are fed selectively from the feed hoppers into a mixing channel, through which the materials are mixed into a composite, and extruded under the action of a twin barrel screw system. Material deposition is performed via a single nozzle. Pressure sensors in both the nozzle channel and the die are used to monitor the parameters of the composite, and to provide feedback to the extrusion process (including the heaters, barrels and the motor drive control) in order to adjust process parameters.

### SUMMARY OF THE INVENTION

It is an object of the invention to provide for a method and a system that obviates at least one of the above mentioned drawbacks.

Additionally or alternatively, it is an object of the invention to improve the additive manufacturing process for three-dimensional structures.

Additionally or alternatively, it is an object of the invention to better guarantee the printing quality or the quality of structures.

Additionally or alternatively, to improve the efficiency of an extrusion based additive manufacturing process for fabricating structures.

Thereto, the invention provides for a system for manufacturing a three-dimensional structure comprising interconnected filaments, the system comprising: a support; a deposition unit including at least one nozzle arranged for discharging build material, wherein the at least one nozzle has an opening area through which filaments are discharged, wherein the at least one nozzle is in fluid communication with a material reservoir arranged to hold build material, wherein the at least one nozzle and the support are relatively moveable with respect to each other; a controller configured to operate during a printing operation the at least one nozzle for deposition of filaments on the support in a predetermined interconnected arrangement in a plurality of stacked layers; a sensor unit configured to monitor, at least during the printing operation, sensory data indicative of an actuation for performing deposition or sensory data indicative of at least one flow parameter of the build material; and a trained machine learning model configured to receive the sensory data as input, and to provide an output relating to control of at least one deposition control parameter for maintaining a predetermined deposition flow rate during the printing operation, and wherein the controller is configured to adjust, based on the output of the trained machine learning model, the at least one deposition control parameter during the printing operation; and wherein at least one sensor of the sensor unit is arranged to monitor the sensory data at at least one location upstream of the nozzle opening area; and wherein the sensor unit includes a first pressure sensor at a first location, and a second pressure sensor at a second location, wherein the first location and the second location are different, and wherein the first pressure sensor is arranged at the first location at the material reservoir, wherein the second pressure sensor is arranged at a location further downstream with respect to the first location.

The trained machine learning model is configured to receive sensory data indicative of flow of build material upstream the nozzle as input in order to provide an output usable for controlling at least one deposition control parameter for maintaining the predetermined desired deposition flow rate during the printing operation. Monitoring the sensory data at at least one location upstream the nozzle opening area provides for significant controlling advantages. The system enables better prevention of deposition or printing errors. The at least one deposition control parameter can be effectively adjusted before potential future deposition or printing errors have been effectively formed in the printed structure. Such indications of future printing errors may be already detectable in the sensory data at at least one location upstream of the nozzle opening area, allowing an early warning based on which the controller can act accordingly using the trained machine learning model. In this way, the responsiveness to potential indications of future printing and/or deposition errors can be improved.

The claimed invention provides important advantages with respect to systems which solely collect sensory data from sensors arranged downstream of the nozzle opening area, for instance by collecting images of the (already) printed structure using e.g. a camera. The dynamic and/or adaptive control of the at least one deposition control parameter can be significantly enhanced. The controller can be configured to detect indicators of future printing errors (errors that have not yet developed in the printed structure), and may act accordingly. In this way, printing errors may be prevented before they have occurred or fully developed in the printed structure.

The controller may be used for preventive maintenance. The sensory data at at least one location upstream of the nozzle opening area is ideal for this purpose. Unplanned downtime and costs from anticipated equipment failure (e.g. nozzle) can be prevented. In this way, the equipment or hardware can be replaced preventively to reduce the need for repair and/or replacement during a printing process. The maintenance can be planned in advance resulting in a higher productivity of the additive manufacturing processes. In some examples, the controller can actively take into account events or patterns linked to particular printing irregularities (e.g. caused by the nozzles during the print job). The efficiency of the extrusion based parallel 3D printing process can be significantly increased, especially when a large number of structures are manufactured in parallel. Various extrusion based additive manufacturing processes may be used. The invention enables a better control and steering of the printing process, which can significantly increase, or even maximize, the achieved productivity.

In order to increase productivity obtained by means of the extrusion based 3D-printing process, a plurality of printing nozzles can be employed for printing a plurality of structures in parallel. One or more individual nozzles may grouped together and dedicated to printing an individual structure or part to be manufactured. Various configurations can be employed. In a situation of a paste with ideal rheology and/or homogeneity of the feedstock this may boost the printing process by multiplying the output by the amount of nozzles or orifices used per printed structure. However, in practical situations, various errors in the printing process can occur, occasionally and sometimes even rather frequently. The errors may highly depend on the employed configurations of the additive manufacturing system and/or material properties of the build material. A large number of errors are caused by the used feedstock, such as: inhomogeneity in the build material (e.g. paste or extruded filament), non-constant rheology of paste, non-constant and/or non-uniform composition of feedstock, particle in feedstock clogging the nozzle, dirt on the nozzle, density fluctuations in the feedstock, gas (e.g. air bubble) in the feedstock or build material, etc.

In order to monitor the performance of the printing process and detect potential errors or future errors (preventive), the printing process is monitored by means of the sensor unit, wherein at least one sensor of the sensor unit is arranged to monitor the sensory data at at least one location upstream of the nozzle opening area. The sensor unit may for instance include one or more sensors and/or integrated monitoring arrangements integrated within the system. For example, one or more sensors may be arranged to detect a value indicative of the flow of build material extruded through the nozzle. Additionally or alternatively, it is also possible for instance to use one or more sensors being configured to monitor a value indicative of the extrusion force needed for extruding the build material. Various sensor types and/or monitoring arrangements can be used to track values which can be used to detect errors or malfunctions of components of the additive manufacturing system. In some cases, the controller may be arranged to predictively detect future errors, which provides significant advantages for preventive maintenance. It is also possible that the sensors or monitoring arrangements are configured to identify events which tend to be indicative for an error or malfunction (e.g. hardware failure). Such sensors (or monitoring arrangements) may be used to track errors at the level of the individual nozzles being used for parallel printing structures. Additionally, it is also envisaged that the monitoring unit comprises a camera system using images to monitor extruded build material. Based on the images it can also be determined whether the nozzles are operating under normal circumstances. The obtained images may be processed and/or analyzed. It is also envisaged that statistical models such as a trained machine learning model is employed for analyzing the captured images in order to identify errors based on images.

The method enables an automated feedback loop which evaluates at least one detected event indicative for a current or future printing irregularity, and based on that decide whether to plan a repair involving interrupting the current printing process, carry out needed repairs of the one or more failing devices (e.g. nozzles), and restart a new printing process. This provides better abilities for preventive maintenance. It is also possible that, the controller can adapt one or more parameters in order to compensate for printing irregularities. In this way, it can be effectively prevented that printing errors form in the printed structure. Furthermore, the controller can also take into account the nature/impact of the error and the probabilities of errors which may occur in the future, based on a statistical model.

As a result, the controller may better control the printing process in order to increase the achieved productivity of parallel additive manufacturing using the plurality of nozzles.

In an advantageous way, the efficiency of the printing process can be improved while guaranteeing a certain deposition/printing quality. The system can provide a dynamic and adaptive control which can adjust one or more deposition control parameters for providing an adequate filament deposition, even when deposition conditions are changed.

The build material can be specifically chosen for some applications for which the structure is to be used. In some examples, the build material (e.g. paste) is first produced using various ingredients. Even when same ingredients are used, some variations in properties in the build material may exist. An improved versatility in printing various build materials with different properties and/or flow characteristics (cf. rheology) can be obtained using the system according to the invention. Advantageously, it may no longer be required to first determine specific properties of the build material used for printing the structure. The machine learning model (e.g. artificial neural network) can be trained to compensate for detrimental filament deposition conditions.

For example, the flow of the build material and printing speed may depend on the build material composition, nozzle diameter, design (turns, deposition path during printing), etc. An adequate deposition of filaments may require adjustment of one or more of these parameters. Optimizing these deposition control parameters and recording its effect takes a lot of time and/or effort. Also the build material (e.g. paste) can degrade over time, be badly mixed, etc, requiring an adequate adjustment for guaranteeing the printing quality. The printing system according to the invention can compensate for these effects, which can i.a. significantly decrease the operating cost and provide a more efficient printing process.

Optionally, the filaments are continuously deposited. The interconnected filaments can be distanced from each other, or be adjacent with respect to each other.

Optionally, the sensor unit includes at least one pressure sensor configured to monitor pressure exhibited on the build material at the at least one location during the printing operation.

The pressure applied on the build material in the deposition unit may be easy to determine, providing a simple but accurate design.

The pressure value can be monitored. The neural network may be trained to detect certain patterns in the pressure value monitored over time and provide an output which can be used for adjusting the at least one deposition control parameter. For example, sudden fluctuations escaping a certain plateau level (e.g. range or band) can be detected. These sudden fluctuations can be identified based on one or more peaks and/or troughs in the pressure data, which can be linked to extrusion irregularities and thus a defect in the structure being manufactured.

The extrusion conditions can be analyzed during deposition of the filaments in order to detect one or more deposition defects when the structure is being formed. The printing process can thus be processed in real-time by processing pressure values monitored during filament deposition. During deposition the pressure value may be at a plateau level. Sudden positive peaks or negative peaks (trough in graph) breaking out of the plateau level may indicate a deposition irregularity.

The plateau level can be a range (cf. band/channel/envelope) with a baseline and an upper limit and a lower limit. The deposition irregularity can be identified at the moment the pressure value suddenly breaks out of the range of the plateau level. The pressure value may have positive and/or negative peaks falling within the plateau level, which are not identified as deposition irregularities, and positive and/or negative peaks breaking out of the plateau level, which are identified as deposition irregularities.

The sensor data (e.g. pressure value, images of a scene, etc.) may be collected for the entire period during which the filaments are deposited. Optionally, a predefined interval is definable by a user. It is also possible that sensor data is sampled at regular time intervals or at predetermined time steps relating to the printing process (e.g. when a layer is finished).

Optionally, the sensory unit includes means for determining a weight of an already printed portion of the three-dimensional structure. The weight relatively easy to measure while providing an accurate indication of the printed structure being printed.

The sensor data may include one or more weight measurements. Advantageously, this can provide instantaneous measurement and a faster response time can be obtained. Less processing may be required compared to for instance an optical system providing images. In some examples, image processing may result in delays due to processing. A camera can provide control over a plurality of nozzles and/or printers. Advantageously, an optical inspection by means of a camera enables verification of an end product being printed. A combination of techniques can also be employed.

Optionally the sensor unit includes an optical measurement unit to capture one or more images and a non-optical measurement unit configured to collect one or more sensor data indicative of at least one of: a deposition flow rate at which build material is discharged for depositing the filaments, or a pressure applied on build material in the deposition unit for achieving deposition of the filaments. Fluctuations detected by the non-optical measurement unit will be subsequently detected by the optical measurement unit (camera images). The system can adjust control parameters in order to avoid printing errors or anomalies.

The neural network can provide an output for adjusting predictively print parameters in advance. Furthermore, it is possible to remove printing structures with printing errors before the printing process is finished. Advantageously, the faulty printed structures which are removed preventively can be re-used. Loss of material can be minimized. The system can provide an improved parameter optimization.

If an unknown material is used (e.g. unknown paste), advantageously, the system can effectively determine optimal print parameters in order to ensure an optimal printer output. Also batch variations, nozzle variations, nozzle opening size, etc. can be handled automatically for determining optimal print parameters.

The invention may enable to detect a formed air bubble in the paste, which can result in a bad quality printing. However, a formation of an air bubble in the paste can also be detected in a timely fashion. The system enables to verify the printed product and immediately adjust printing parameters. Hence, it is not required to wait for an end product to be formed for verifying the quality.

The machine learning model (e.g. neural network) has one or more outputs relating to at least one deposition control parameter. As a result of adjustment of the at least one deposition control parameters the efficiency of the printing process can be improved. For example, the structure may be printed in a shorter amount of time. Additionally or alternatively, also the printing quality may retained or even improved.

Optionally, the sensor unit includes at least one flow sensor configured to monitor a flow rate of the build material at the at least one location during the printing operation.

In some examples, a build material (e.g. pate) can respond with a delay to a change in flow. The trained neural network can be better in handling such time effects. The at least one flow sensor may provide sensory data indicative of the flow rate. Various types of flow rate sensors can be used.

In an example, the controller is configured to determine a fiber thickness using the data provided by the sensor unit. This fiber thickness can be used as input to the neural network. The neural network may then calculate an output indicative of how a flow of build material is to be adapted for improving the printing process.

The sensor unit may be configured to monitor values in real-time. For example, the deposition flow rate and pressure/force applied on build material for achieving deposition can provide real-time sensory data to the system. The optical measurement unit can provide real-time and/or offline sensory data to the system.

Optionally, the sensor unit includes at least one force sensor configured to monitor an actuation force applied on the build material in the reservoir for accomplishing discharge of build material through the nozzle opening area located further downstream.

A force/load applied on the build material (e.g. in a nozzle reservoir) may be easier to identify than a flow measurement (e.g. at the nozzle), as the build material may have a relatively high viscosity (e.g. paste). By employing a force/pressure measurement, the system according to the invention can be easier to apply, more accurate, provide better identifications of deposition defects, more cost-effective, etc. with regard to known systems.

Optionally, the sensor unit includes at least one sensor arranged at a fluid communication line between the material reservoir and the nozzle opening area.

The fluid communication line between the material reservoir and the nozzle may provide for an accurate indication of irregularities which can be detected timely by the controller. For example, the sensor unit may be configured to detect the fluid pressure upstream of the nozzle outlet. In some examples, the measuring the pressure at the fluid communication line between the material reservoir and the nozzle opening area is more advantageous than monitoring the pressure in the build material reservoir. The pressure on reservoir can be compensated with screw speed at the build material reservoir. Monitoring the pressure after the screw can enable more accurate control. Often, the pressure after the screw is more usable in determining whether printing irregularities are being developed during the extrusion process. Hence, the controller may be able to better prevent printing errors.

Optionally, the deposition unit includes a shutter selectively operable for influencing flow of build material through the nozzle opening area, wherein the sensor unit includes at least one sensor arranged downstream of the shutter.

The machine learning model may be better able to detect irregularities linked to (future) printing errors when sensory data of a sensor positioned downstream of the shutter is used. The sensor may for example be a pressure sensor or a flow sensor. It will be appreciated that the sensor may be arranged downstream of the shutter and upstream of the nozzle opening area. Such a positional arrangement may enable to sensor to collect data based on which the controller can better control the system, preferably thereby preventing potential printing errors before they have been developed. Potential printing errors in the printed structure may be better prevented by adjusted one or more operational parameters such as to compensate before said errors in the printed structure have developed.

Optionally, the deposition unit includes a screw configured to rotate for accomplishing extrusion of build material through the nozzle opening area, wherein the sensor unit includes at least one sensor arranged downstream of the screw.

Using multiple pressure sensors upstream of the nozzle opening area may enable the controller to better adjust, based on the output of the trained machine learning model, the at least one deposition control parameter during the printing operation. Advantageously, this can also enable to better distinguish between different types of irregularities.

Optionally, the sensor unit includes a plurality of sensors arranged at different locations inclusively between material reservoir and the nozzle opening area.

Optionally, the trained machine learning model is trained to generate the output for maintaining the deposition flow rate in a predefined range.

Optionally, the trained machine learning model is trained to generate the output for maintaining a predetermined deposition flow rate profile.

Optionally, the at least one deposition control parameter includes at least one of: an actuation force or pressure applied by the system for achieving deposition of the filaments, one or more additives added to the build material, a speed of an extrusion screw used for discharging build material, a size of an opening area through which build material is discharged, or a temperature to which the build material is heated for deposition, or ultrasonic vibrations and/or electromagnetic radiation applied on the build material for adjusting its rheological properties.

The neural network may have one or more outputs relating to at least one deposition control parameter. As a result of adjustment of the at least one deposition control parameters the efficiency of the printing process can be improved. For example, the structure may be printed in a shorter amount of time. Additionally or alternatively, also the printing quality may retained or even improved.

In some examples, a build material (e.g. pate) can respond with a delay to a change in flow. The trained neural network can be better in handling such time effects.

In an example, the controller is configured to determine a fiber thickness using the data provided by the sensor unit. This fiber thickness can be used as input to the neural network. The neural network may then calculate an output indicative of how a flow of build material is to be adapted for improving the printing process.

Optionally, the sensor unit includes one or more load sensors positioned at the material reservoir, between the material reservoir and the nozzle, and/or at the nozzle, the one or more load sensors being configured to measure data indicative for pressure exhibited on the build material, wherein the system is configured to process data provided by the one or more load sensors in order to determine data indicative of the flow rate of build material through the deposition unit, wherein the machine learning model is configured to receive said data indicative of the flow rate of build material through the deposition unit as input.

Optionally, the sensor unit includes a load sensor positionable at a nozzle reservoir, the load sensor being configured to measure data indicative for pressure in the nozzle reservoir, wherein the controller is configured to process data provided by the load sensor. The data may be used at least in part as input to the machine learning model (e.g. neural network).

Optionally, the sensor is a load cell including a transducer arranged for creating an electrical signal whose magnitude is proportional to the force being measured, wherein the load cell is arranged to measure the force applied for discharging the build material out of the nozzle.

Optionally, the sensor unit is configured to capture one or more images of a scene of an already formed portion of the structure being printed, wherein the neural network is configured to receive the one or more images as input to the input layer of a dedicated machine learning model (e.g. neural network). This second machine learning model or artificial neural network can be used to verify whether the controller has successfully prevented printing errors in the printed structure. Advantageously, this also allows for better automated training of the first machine learning model which the controller uses for adjusting the at least one deposition control parameter during the printing operation.

A neural network for processing images may use an input layer with separate neurons for each pixel in the image. However, it is also possible that only a portion of the total amount of pixels of the full image is used as input.

Optionally, the sensor unit captures a series of images at regular time intervals. In some examples, the controller is configured to operate the sensor unit for capturing an image at certain time points. For example, it can be advantageous to capture an image when a layer of interconnected filament arrangement is deposited. Hence, prior to starting the successive layer to be stacked on the previous layer, an image of the finished previous layer can be taken in order to have a better view. Advantageously, a more accurate neural network model can be obtained in this way.

Optionally, at least one further neural network is used configured to determine a quality of the printing based on the sensor data. This further neural network may be first used in order to determine how good the printing process is being performed at the moment. The output of this further neural network can then be used at least in part by the trained neural network for adjusting the at least one deposition control parameter.

Optionally, the sensor unit comprises at least one camera arranged above the support with a field of view encompassing a working area on the support on which the structure is manufactured.

Various types of cameras can be used. The camera may be configured to take images in a visible spectrum. However, it is also envisaged that additionally or alternatively, the camera is configured to take images in at least a portion of a non-visible spectrum (e.g. infrared, X-ray, etc.). In some examples, a laser imaging system is used, providing accurate measurements. Advantageously, this can provide for a more accurate control by means of the neural network.

Optionally, the sensor unit includes a plurality of cameras providing different point of views, wherein one or more images captured at the different point of views are provided as input to the trained neural network.

Different views may provide more information regarding the current printing process and the resulting already formed structure. Optionally a first camera is used for obtaining images from top view of the structure being manufactured, and a second camera is used for obtaining images from a side view of the structure being manufactured. It is also possible that a plurality of cameras are used for obtaining a three-dimensional image of the already formed structure.

Optionally, a 3D camera is used for capturing the one or more images. The images may have a depth map. In some advantageous examples, the 3D camera includes a depth sensor configured to measure a distance of each point in its field of vision by transmitting light (e.g. invisible near-infrared light) and measuring its time of flight after it reflects off.

Optionally, a 3D camera system is used including a camera (e.g. RGB) and an IR transmitter configured to cover the working space at which the structure is manufactured with a constant, predetermined pattern of infrared dots. The 3D camera system may include a sensor (e.g. monochrome CMOS) placed at an offset relative to the IR transmitter. The 3D camera can be configured to calculate the depth at each pixel of the RGB camera based on a difference between the observed and expected IR dot positions. The depth information can be provided as input to the neural network, which classifies the identified pattern of the structure. The 3D camera system may provide as sensor data dots arranged in a 3D environment.

Optionally, the deposition unit includes a deposition head with the at least one nozzle, and wherein the sensor unit is attached to or integrated with the deposition head.

For example, the camera may be coupled to the deposition head. In this way, capturing the at least one image may be significantly facilitated. A simpler design can be obtained. The position of the camera with respect to the support and the structure can be better determined, resulting in more accurate results.

Optionally, the deep neural network is a convolutional neural network configured to extract features from captured input images for evaluation of the current printing operating condition. Different types of deep learning models including one or more neural networks can be used.

It will be appreciated that the structures 10 can be used for various applications. Some exemplary applications are catalytic combustion of substances, environmental catalysis, heat exchanger, medical implants, etc. Advantageously, the production process of the structure can be better monitored such as to better control the quality of structure made during the printing process. In this way, a structural integrity which can be desired to specific applications can be better guaranteed. Also the printing process can be made more efficient, and potential losses due to printing errors can be reduced or even prevented.

According to an aspect, the invention provides for a method for controlling a system arranged for manufacturing a three-dimensional structure comprising interconnected filaments, the system including a deposition unit with at least one nozzle arranged for discharging build material, wherein the at least one nozzle has an opening area through which filaments are discharged, wherein the at least one nozzle is in fluid communication with a material reservoir arranged to hold build material, and wherein the system is configured to deposit filaments in a predetermined interconnected arrangement in a plurality of stacked layers for forming the structure, wherein the computer implemented method includes the steps of: monitoring, by means of a sensor unit, at least during the printing operation, sensory data indicative of an actuation for performing deposition or sensory data indicative of at least one flow parameter of the build material, and providing the sensory data as input to a trained machine learning model configured to generate an output relating to control of at least one deposition control parameter for maintaining a predetermined deposition flow rate during the printing operation, wherein the at least one deposition control parameter is adjusted during the printing operation based on the output of the trained machine learning model, wherein at least one sensor of the sensor unit is arranged to monitor the sensory data at at least one location upstream of the nozzle opening area; and wherein the sensor unit is provided with a first pressure sensor at a first location, and a second pressure sensor at a second location, wherein the first location and the second location are different, and wherein the first pressure sensor is arranged at a first location at the material reservoir, wherein the second pressure sensor is arranged at a location further downstream with respect to the first location.

Advantageously, printing errors can be effectively prevented as the at least one deposition control parameter can be timely controlled for maintaining the predetermined desired deposition flow rate. If for instance the system would only rely on sensory data collected by means of sensors (e.g. camera, X-ray, etc.) at a location downstream of the nozzle opening area, printing discrepancies or errors would not be timely detected, since such discrepancies or errors would be derived from the sensory data. Instead, the system according to the invention, collects sensory data from sensors arranged at advantageous locations, better allowing to prevent printing errors.

Advantageously, arranging at least one sensor of the sensor unit to monitor the sensory data at at least one location upstream of the nozzle opening area allows for early detection of possible irregulates and early compensation for such irregularities in order to prevent printing errors.

Optionally, the one or more deposition control parameters are adjusted in real-time during printing of the structure. Optionally, the controller is configured to evaluate deposition of filaments for a plurality of time steps during printing of the structure for obtaining a real-time and continuous evaluation of the printing quality.

Various neural network models and/or neural network architectures can be used. A neural network has the ability to process, e.g. classify, sensor data relating to one or more states of the printing of the structure. A neural network can be implemented in a computerized system. Neural networks can serve as a framework for various machine learning algorithms for processing complex data inputs. Such neural network systems may "learn" to perform tasks by considering examples, generally without being programmed with any task-specific rules. A neural network can be based on a collection of connected units or nodes called neurons. Each connection, can transmit a signal from one neuron to another neuron in the neural network. A neuron that receives a signal can process it and then signal additional neurons connected to it (cf. activation). The output of each neuron is typically computed by some non-linear function of the sum of its inputs. The connections can have respective weights that adjust as learning proceeds. There may also be other parameters such as biases. Typically, the neurons are aggregated into layers. Different layers may perform different kinds of transformations on their inputs to form a deep neural network.

A deep learning neural network can be seen as a representation-learning method with a plurality of levels of representation, which can be obtained by composing simple but non-linear modules that each transform the representation at one level, starting with the raw input, into a representation at a higher, slightly more abstract level. The neural network may identify patterns which are difficult to see using conventional or classical methods. Hence, instead of writing custom code specific to a problem of printing the structure at certain printing conditions, the network can be trained to be able to handle different and/or changing structure printing conditions e.g. using a classification algorithm. Training data may be fed to the neural network such that it can determine a classification logic for efficiently controlling the printing process.

It will be further understood that when a particular step of a method is referred to as subsequent to another step, it can directly follow said other step or one or more intermediate steps may be carried out before carrying out the particular step, unless specified otherwise. Likewise it will be understood that when a connection between components such as neurons of the neural network is described, this connection may be established directly or through intermediate components such as other neurons or logical operations, unless specified otherwise or excluded by the context.

It will be appreciated that the print head trajectory and velocity and/or acceleration is also regarded as print parameters which can be controlled by the system/method.

The system and method may be employed for manufacturing a three-dimensional porous structure, wherein the porous structure is formed having interconnected pores.

It will be appreciated that the porous structure can have filaments spaced apart, or it can be a dense structure with fibers adjacent to each other. When the filaments are adjacent to each other, the porosity can be provided by the filaments themselves. When the filaments are spaced from each other, the porosity can be mainly provided by the pores formed between the filaments. The filaments themselves can also be porous, having smaller pores.

Some embodiments may be implemented, for example, using a machine or tangible computer-readable medium or article which may store an instruction or a set of instructions that, if executed by a machine, may cause the machine to perform a method and/or operations in accordance with the embodiments.

It will be appreciated that any of the aspects, features and options described in view of the system apply equally to the method and the described computer program product and use. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of a system;
Fig. 2a and 2b show a schematic diagram of a machine learning model;
Fig. 3 shows a schematic diagram of a system;
Fig. 4 shows a schematic diagram of a system;
Fig. 5 shows a schematic diagram of a system;
Fig. 6 shows a schematic diagram of a system;
Fig. 7 shows a schematic diagram of a system;
Fig. 8 shows a schematic diagram of a printed structure;
Fig. 9a, 9b, 9c, and 9d show a schematic diagram of printed structures; and
Fig. 10 shows a schematic diagram of a method.

### DETAILED DESCRIPTION

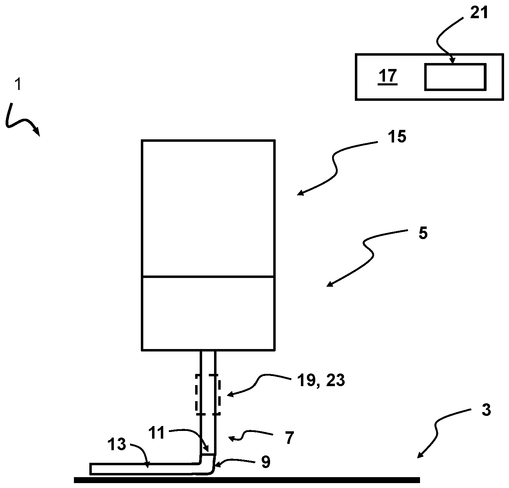

Fig. 1 shows a schematic diagram of a system 1, not falling within the scope of the claims, for manufacturing a three-dimensional structure comprising interconnected filaments, the system 1 comprises a support 3, and a deposition unit 5 including at least one nozzle 7 arranged for discharging build material 9, wherein the at least one nozzle 7 has an opening area 11 through which filaments 13 of build material 9 are discharged, wherein the at least one nozzle 7 is in fluid communication with a material reservoir 15 arranged to hold build material 9, wherein the at least one nozzle 7 and the support 3 are relatively moveable with respect to each other. Further, the system 1 comprises a controller 17 configured to operate during a printing operation the at least one nozzle 7 for deposition of filaments 13 on the support 3 in a predetermined interconnected arrangement in a plurality of stacked layers. The system 1 comprises a sensor unit 19 configured to monitor, at least during the printing operation, sensory data indicative of an actuation for performing deposition or sensory data indicative of at least one flow parameter of the build material. Further, a trained machine learning model 21 is provided which is configured to receive the sensory data as input, and to provide an output relating to control of at least one deposition control parameter for maintaining a predetermined deposition flow rate during the printing operation. The controller 17 is configured to adjust, based on the output of the trained machine learning model 21, the at least one deposition control parameter during the printing operation. Advantageously, the at least one sensor 23 of the sensor unit 19 is arranged to monitor the sensory data at at least one location upstream of the nozzle opening area 11.

Advantageously, the versatility of the extrusion based manufacturing system can be significantly improved. For example, the system may suitable for efficiently printing using different build materials having different material properties and flow characteristics. Advantageously, it may no longer be required to first determine specific properties of the build material used for printing the structure, the controller can be configured to automatically handle such situations using the trained neural network which is provided with sensory data as input.

In this example, the trained machine learning model 21 is integrated in the controller 17. Although in this example, the trained machine learning model 21 is part or incorporated within the controller, it is also envisaged that the trained machine learning model 21 is separated from the controller 17. In some examples (not shown), the trained machine learning model 21 is separated and in communication with the controller 17. Optionally, the trained machine learning model 21 is provided in the cloud for example via the internet or similar transmission protocols. This allows better management (cf. development, deployment, upgrading, updating, training, etc.) of the trained machine learning model 21.

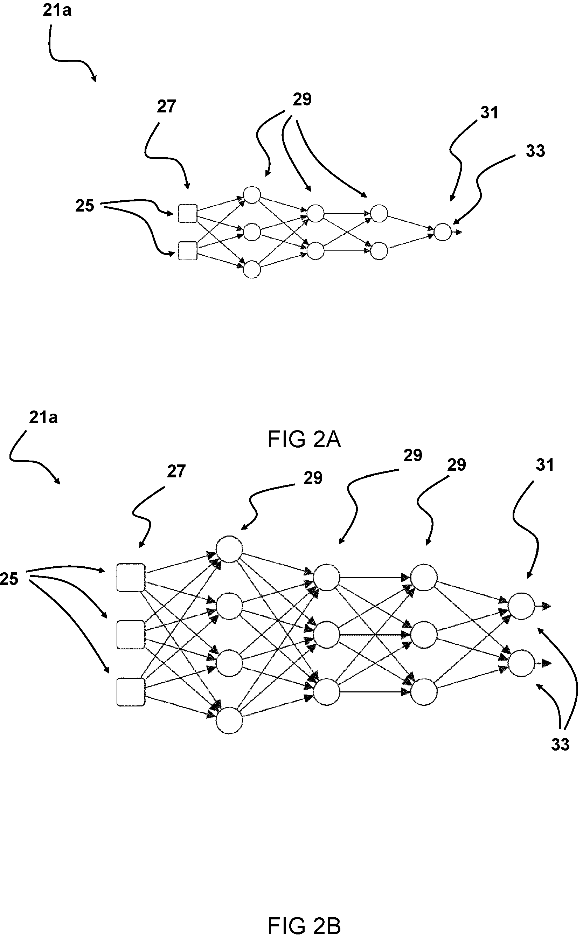

Fig. 2 shows a simplified schematic diagram of machine learning models 21. In these examples, the machine learning models 21 are artificial neural networks 21a. The trained artificial neural networks 21a are configured to receive sensory data from the sensor unit as input, and to provide an output relating to control of at least one deposition control parameter for maintaining a desired deposition flow rate during the printing operation. The controller 17 is configured to adjust, based on the output of the trained artificial neural network 21a, the at least one deposition control parameter during the printing operation. Sensory data at at least one location upstream of the nozzle opening area 11 is collected and provided as input to the artificial neural networks 21a.

In Fig. 2A, the artificial neural network 21a includes to input nodes 25 in the input layer 27. The artificial neural network is a deep artificial neural network with three hidden layers 29 between the input layer 27 and the output layer 31. The output layer 31 includes one output node 33. The artificial neural network 21a may be configured and trained such that the output node 33 relates to control of at least one deposition control parameter for maintaining a predetermined deposition flow rate during the printing operation. The controller 17 is configured to adjust, based on the output node 33 of the trained machine learning model, the at least one deposition control parameter during the printing operation. The control is based on the sensory data collected by the sensor unit 19, wherein the sensor unit includes at least one sensor being arranged upstream of the nozzle opening area 11. In this example, the input layer 27 includes two input nodes 25. The two input nodes 25 may correspond to data coming from two different sensors of the sensor unit, the sensors being preferably arranged upstream of the nozzle opening area 11. It is also possible that the two input nodes 25 are based on a same sensory data. For instance, the collected sensory data may be processed (e.g. one node may be provided with the data obtained by performing a frequency analysis).

In Fig. 2B, an artificial neural network 21a is shown which has three input nodes 25 in the input layer 27, and two output nodes 33 in the output layer 31. The artificial neural network 21 is adapted to receive the sensory data as input coming from one or more sensors configured to collect data at at least one location upstream of the nozzle opening area 11.

It will be appreciated that the artificial neural networks 21a shown in Fig. 2A and 2B are exemplary and various different configurations are envisaged. For example, the deep artificial neural networks 21a may have a different number of intermediate hidden layers 29, different number of input nodes 25, a different number of output nodes 33, a different number of nodes for the intermedia layers 29, etc. A wide variety of configurations are possible, taking into account the number and/or type of sensors of the sensory unit.

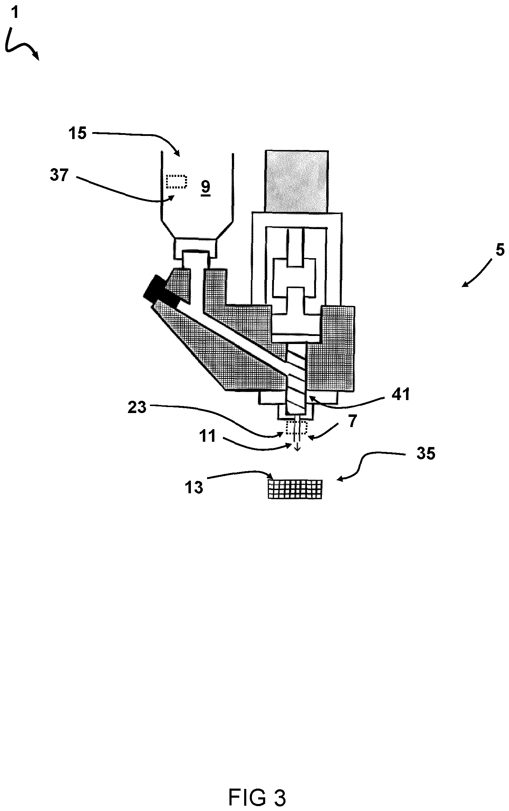

Fig. 3 shows a schematic diagram of a system 1 for manufacturing a three-dimensional structure 35 comprising interconnected filaments 13. A deposition unit 5 is provided with a nozzle 7 arranged for discharging build material. Filaments 13 of build material exit from the nozzle opening area 11. The nozzle 7 is fluidly coupled to a material reservoir 15 arranged to hold build material 9. The system 1 comprises a controller (not shown) configured to operate during a printing operation the nozzle 7 for deposition of filaments 13 in a predetermined interconnected arrangement in a plurality of stacked layers. The system 1 comprises a sensor unit 19 configured to monitor, at least during the printing operation, sensory data indicative of an actuation for performing deposition or sensory data indicative of at least one flow parameter of the build material. The controller uses a trained machine learning model (not shown) for controlling at least one deposition control parameter for maintaining a predetermined deposition flow rate during the printing operation. The trained machine learning model is configured to receive the sensory data as input, and to provide an output relating to control of at least one deposition control parameter. The controller 17 is configured to adjust, based on the output of the trained machine learning model 21, the at least one deposition control parameter during the printing operation. The sensor unit includes a sensor 23 for providing sensory data which is used as input to the machine learning model. The sensory data may be also processed prior to feeding it to the machine learning model (e.g. noise reduction, model order reduction, frequency spectrum, etc.). The sensor 23 is physically arranged in such a way in the deposition unit 5 in order to monitor the sensory data relating to the fluid flow of build material at at least one location upstream of the nozzle opening area 11.

Sensor 23 is a pressure sensor configured to monitor pressure exhibited on the build material at the at least one location during the printing operation. Sensor 23 may also be a flow sensor configured to monitor a flow rate of the build material at the at least one location during the printing operation. The sensor unit also includes at least one force sensor 37 configured to monitor an actuation force applied on the build material 9 in the reservoir 15 for accomplishing discharge of build material through the nozzle opening area 11 located further downstream. The two input data are provided as input to the trained machine learning model.

In this example, the sensor unit includes at a sensor 23 arranged at a fluid communication line between the material reservoir 37 and the nozzle opening area 11. Additionally, in this example, the deposition unit 5 includes a screw 41 configured to rotate for accomplishing extrusion of build material through the nozzle opening area 11. Advantageously, the sensor unit includes at least one sensor arranged downstream of the screw 41.

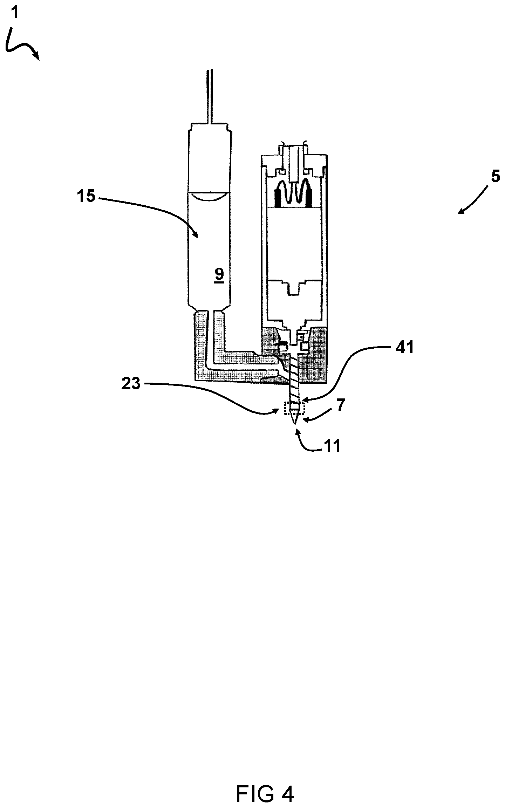

Fig. 4 shows a schematic diagram of an exemplary system 1, not falling within the scope of the claims. The system includes a deposition unit 5. Similar as in the example shown in fig. 3, the deposition unit 5 includes a screw 41 configured to rotate for accomplishing extrusion of build material through the nozzle opening area 11. The sensor unit includes at least one sensor arranged at an end portion of the screw or downstream of the screw 41, but upstream of the nozzle opening area 11 of the nozzle 7.

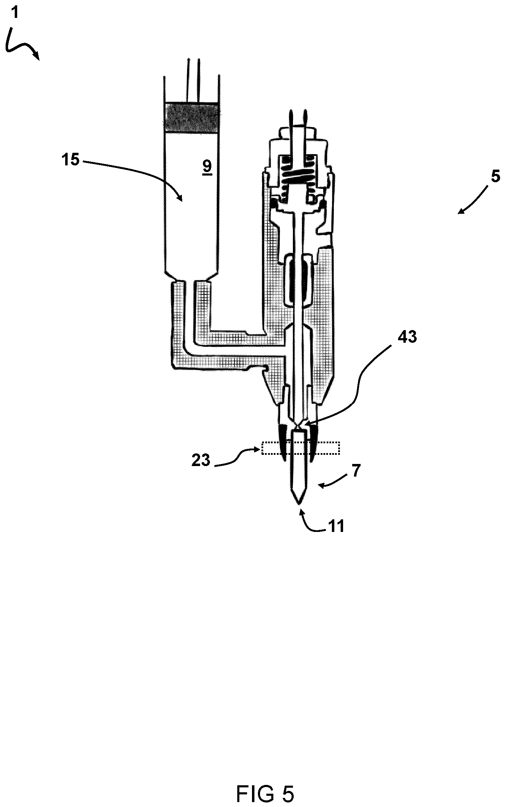

Fig. 5 shows a schematic diagram of an exemplary system 1, not falling within the scope of the claims. The deposition unit 5 of the system 1 includes a shutter 43 selectively operable for influencing flow of build material discharged through the nozzle opening area 11.

The sensor unit includes at least one sensor 23 arranged downstream of the shutter 43. In this way, the controller may be able to more accurately adjust at least one deposition control parameter for maintaining a predetermined deposition flow rate during the printing operation.

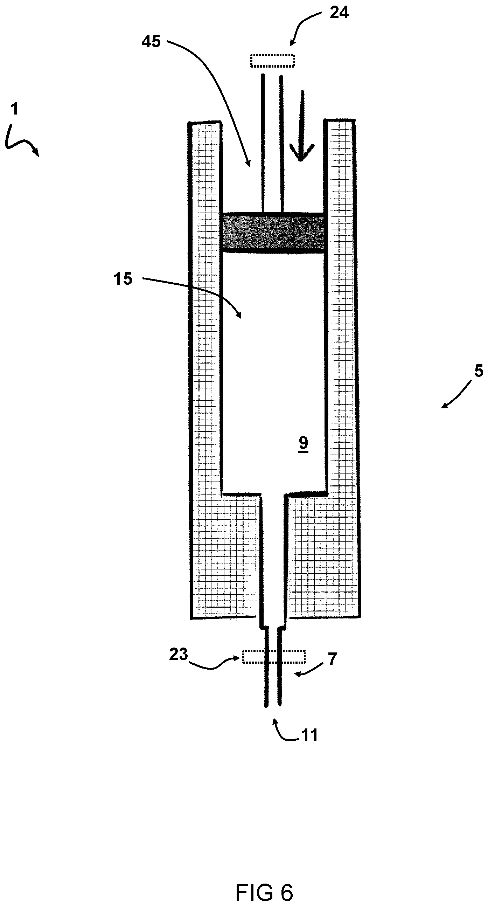

Fig. 6 shows a schematic diagram of an exemplary system 1. The deposition 5 includes a piston 45 which is actuated in a controlled way in order to discharge build material 9 through the nozzle opening area 11 of the nozzle 7. The sensor unit may include a sensor configured to monitor a value indicative of the extrusion force needed for extruding the build material (e.g. power needed for actuating the piston). It will be appreciated that various other sensor types and/or monitoring arrangements can be used to track values which can be used to detect flow irregularities which may result in printing errors. Advantageously, the sensor unit includes a plurality of sensors arranged at different locations inclusively between material reservoir and the nozzle opening area. For instance, a first sensor may be arranged upstream of the nozzle opening area 11. Preferably, the first sensor is arranged at or adjacent to the nozzle area opening 11. The first sensor 23 is a pressure sensor configured to monitor values indicative of the pressure of the build material flowing towards the nozzle opening area 11. A second sensor 24 is arranged at the deposition unit 5.

The sensory data collected by the first sensor 23 and the second sensor 24 are provided as input to the machine learning model. In this way the controller may be better able to control one or more deposition control parameters in order to maintain a predetermined deposition flow rate during the printing operation.

The first pressure sensor is arranged at a first location at the material reservoir, and the second pressure sensor is arranged at a location further downstream with respect to the first location, the first and second locations being upstream of the nozzle opening area 11.

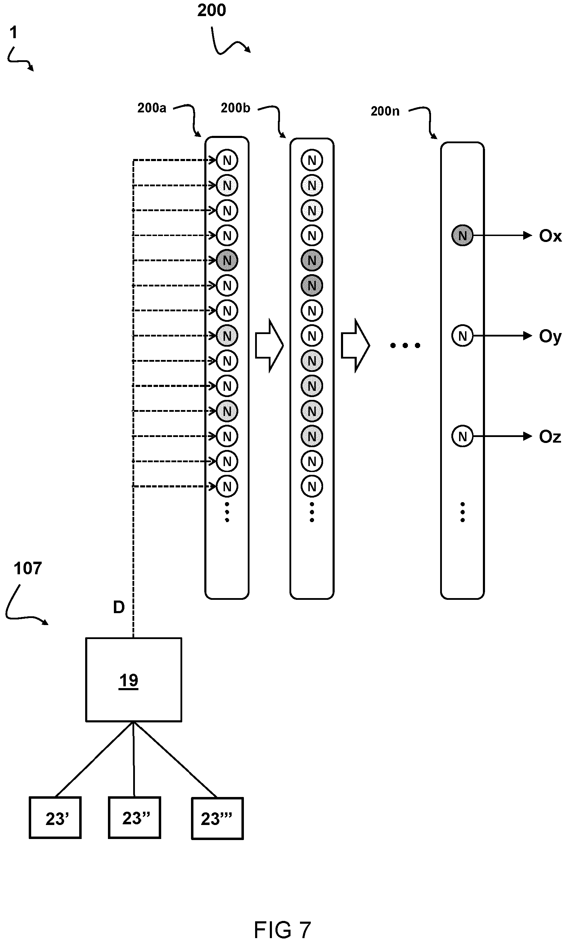

Fig. 7 shows a schematic diagram of a system 1. A schematic diagram of a deep neural network 200 comprising a plurality of neurons "N" is illustrated. The neurons "N" are distributed over multiple layers 201a-n to form a deep neural network. Typically, such layers include an input layer 200a, an output layer 200n, and one or more one or more hidden layers 200b-(n-1) therebetween. The trained neural network can be configured to calculate output values Ox, Oy, Oz of neurons in the output layer 200n which may be based on a series of received input values based on data received by the sensor unit 107.

In the shown example, the neural network 200 comprises an input layer 200a with neurons configured to receive sensory data from the sensor unit 19 as input, and to provide an output relating to control of at least one deposition control parameter for maintaining a predetermined deposition flow rate during the printing operation. The controller of the system 1 is configured to adjust, based on the output of the neural network 200, the at least one deposition control parameter during the printing operation. The sensor unit 19 includes one or more sensors 23', 23", 23‴ arranged to monitor the sensory data at at least one location upstream of the nozzle opening area. In this example, the sensor unit 19 comprises three different sensors 23', 23", 23‴. It will be appreciated that a different number of sensors may be used. It is also possible that at least one sensor of a plurality of sensors of the sensor unit 19 is arranged downstream the nozzle opening area 11 (e.g. camera system, laser measurements of deposited structure, X-ray, etc.).

Various types of sensory data or data derived therefrom can be used as input for the artificial neural network 200. In some embodiments, the input values may include a respective time stamp indicating when the sensory data was captured.

In some embodiments, e.g. as shown, interconnections between the neurons "N" are formed exclusively across subsequent layers, e.g. between the input layer 200a and the first hidden layer 200b, between the first hidden layer 200b and the second hidden layer 200c (not shown), etc., up to the last hidden layer (index n-1, not shown) and the output layer 200n. Also other configurations of networks and connections may be envisaged.

The controller can be configured to communicate with the sensor unit 19 comprising at least one sensor device for registering sensor data representing a current fluid properties (e.g. pressure, flow rate) of the build material. The controller can be also configured to comprise or communicate with the neural network 200 as described herein. For example, neural network 200 is configured (and/or programmed) to receive the sensor data D, and process the sensor data D to calculate the one or more output values Ox, Oy, Oz, etc.

Many types of sensor devices are envisaged. Also combinations of two or more sensors can be used as input to a neural network. The two or more sensors may be of the same type or different types. The system comprises a number of pressure sensors. The system may alternatively, or additionally comprise sensors which monitor actuation forces or pressures applied for achieving discharge of build material (e.g. piston pressure, screw rotation, motor actuation, power consumption by the actuator, etc.).

In some examples, the output of the sensor unit is not dependent on a fixed clock interval. For example, input from the sensor may be received at any time, as soon as a new event occurs (e.g. some printing steps carried out, a layer fully printed, one filament deposited, two neighboring filaments deposited, etc.). Hence, information about the print path can be used for determining the time steps at which sensory data is collected. In some examples, the sensory data is collected at regular time intervals providing a continuous evaluation (in real-time). An event may also be defined, e.g., by a change of some state which is measured by the respective sensor.

Based on the sensor data registered by the sensor unit 19, the neural network 200 may be trained to classify the data. In some embodiments, the classifications may be predetermined, and the neural network may be trained to recognized the classifications (supervised learning). In other embodiments, the neural network may itself determine a set of classifications that may then be labelled (unsupervised learning). In some examples, the output of the neural network may calculate a probability that one or more deposition control parameter are to be adjusted in a certain way.

The classification values Ox, Oy, Oz may serve as input to the controller for adjusting the at least one deposition control parameter. It may also be served as input to further system components (not shown) of the autonomous extrusion-based printing system which may take action or present options based on the classification. The classification values Ox, Oy, Oz may also be simply output to a user interface reporting the event (not shown).

It will be understood that the aspects of the present disclosure may also relate to corresponding methods of using a neural network, e.g. in a method for classifying discharge of build material by the deposition unit, using the neural network 200 as described herein. In one embodiment, the method comprises applying network input values associated with a current fluid condition of the build material upstream of the nozzle opening area 11 to respective neurons at the input layer 200a of the neural network 200. In another or further embodiment, the method comprises calculating network output values Ox and Oy of respective neurons Nx and Ny at an output layer 200n of the neural network 200. For example, the network output values Ox and/or Oy may determine a respective classification of the fluid condition of build material (cf. pressure, flow rate) during printing of the three-dimensional filament structure. The network input values may include timestamps corresponding to a time the condition of the filament deposition is/was registered, e.g. by a sensor unit.

In some embodiments, for a respective fluid condition of build material (e.g. captured by a pressure sensor, flow rate sensor, etc.), exclusively output values corresponding to a subset of neurons affected by the fluid condition of build material, are calculated. Typically, the subset of neurons affected by the specific fluid condition of build material may be determined as those neurons whose output value (significantly) changes as a result of the event. In some embodiments, the subset may include -or exclusively consist of- a first degree chain of neurons defined as those neurons which are directly or indirectly descendent (by their preceding network connections) from a common input neuron. In other words, the subset may include, or exclusively consist of, those neurons which are directly connected in successive layers to the input neuron where the specific fluid condition of build material is received (indicated by gray shading in the shown figure). For example, the input neuron in the input layer is connected to a first set of neurons in the first hidden layer 200b; the first set of neurons in the first hidden layer is connected to a second set of neurons in the second hidden layer 200c; etc. These sets together may form the first degree chain of neurons.

Aspects of the present disclosure may also relate to corresponding methods of training a neural network. In one embodiment, the method comprises classifying conditions of the filament deposition as printing operating condition; and adjusting learning parameters of the neural network 200 to optimize the classification of the printing operating condition. In some embodiments, for a respective printing operating condition, exclusively a subset of the learning parameters associated with a subset of the neurons affected by the printing operating condition, is adjusted. For example, the learning parameters may include the weights of the connections between neurons, wherein the adjusting is restricted to the weights connecting the affected subset of neurons.

In some examples, a (non-transitory) computer-readable medium can be provided with software instructions that, when executed, causes performing the method as described herein, or forming a network or computer system as described herein.

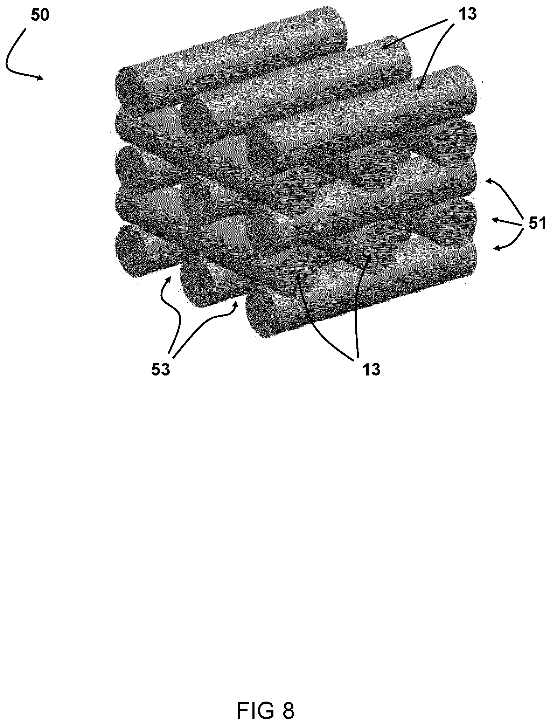

Fig. 8 shows a perspective view of a schematic diagram of a structure 50 manufactured with a system arranged to deposit filaments 13 in a predetermined interconnected arrangement in a plurality of stacked layers 51. The formed structure has interconnected pores 53 which can be essential for various practical applications. The system is controlled by a computer implemented method as set out in the claims.

It will be appreciated that the structures 50 can be used for various applications. Some exemplary applications are catalytic combustion of substances, environmental catalysis, heat exchanger, medical implants, etc. Advantageously, the production process of the structure can be monitored for analyzing the structure made during the process. In this way, a structural integrity which can be desired to specific applications can be better guaranteed.

A build material (e.g. paste, suspension, etc.) can be extruded through a nozzle 1 for three-dimensional filament deposition. However other deposition means may also be used. The deposited filaments 2 can form a layered network. The layers may for instance be successively printed on top of each other, resulting in a structure formed by a stack of successive layers 11. The filaments are spaced apart with respect to each other in order to define channels therebetween. A structure with pores 15 can thus be obtained in this way.

The layerwise deposition of the filaments may include extruding a material through a deposition nozzle 1 to form the filaments 2 while moving the deposition nozzle 1 relative to the print bed or support 101. The nozzle 1 can be moved with respect to the print bed, and/or vice versa. Hence, kinematic inversions are also envisaged.

Different types of structures 10 can be obtained. Such structure may represent a mesh, a lattice structure, a filament network, a scaffold, a filament framework, or the like. Many types of arrangements and structures are possible. The specific arrangement of the filaments defining the structure of the structure may be selected based on the application.

The structural geometry of the structure 10 can be determined by the position and orientation of individual filaments 2. Filaments 2 are frequently oriented at 0° and 90° on alternate layers 11. This arrangement is also known as "0/90 orientation". However, many variant arrangements are possible, for instance 0/60/120 orientation in which filament orientations are changed by 60° on each subsequent layer. For structures with a 0/90 filament orientation, porosity can be considered as a series of long intersecting columnar pores. Alternatively, pores 15 may more closely resemble the geometry of a spiral staircase for a 0/60/120 filament orientation. Many other filament orientations are possible resulting in different pores 15 of the structure 10.

Other aspects of filament positioning can also be varied. For instance, the filaments 2 can be aligned or staggered. In an aligned arrangement of filaments, the filaments are aligned directly above similarly oriented filaments on lower layers. In a staggered arrangement of filaments, the filaments are staggered in an alternating manner by off-setting their horizontal position. These filaments form offset layers and/or diagonal pores. Furthermore, it is also possible that several identical layers 11 are printed before the filament orientation is changed.

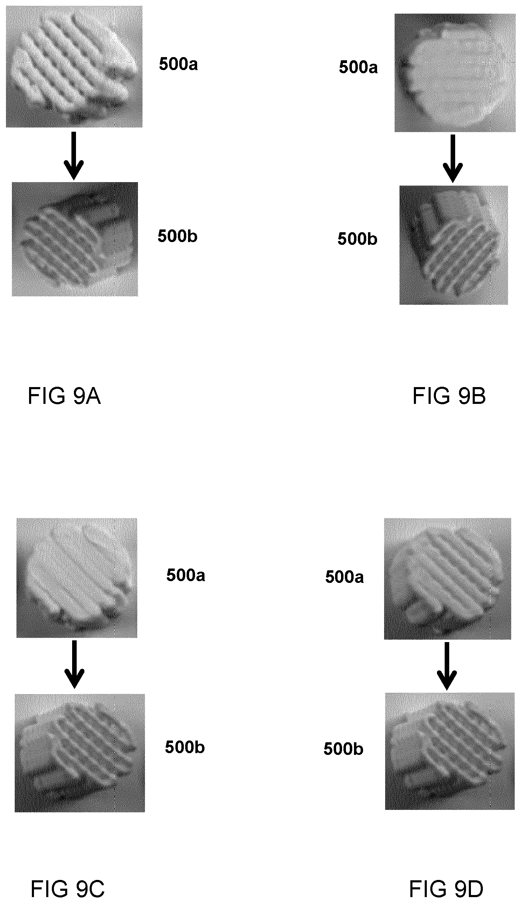

Fig. 9 shows a schematic diagram of captured images 500a, 500b of a scene. The sensor unit includes means arranged for capturing images of an already formed portion of the structure. In this example, the sensor unit includes a camera with a field of view encompassing a working area of the support on which the filaments are deposited in the interconnected arrangement for forming the structure. The images are provided as input to the input layer of a further machine learning model, e.g. a further neural network.

The further neural network provides an output determined based at least in part on the input. Although the input includes at least the image (e.g. pixel values), other sensory data may also be used. The output relates to at least one controlled deposition control parameter in accordance with weight values in the trained deep neural network. The controller is responsive to the output of the neural network for adjusting, the at least one deposition control parameter at least in part based on the output of the neural network.

In figs. 9A-9D, the first image 500a of the scene of the structure represents an inadequate condition of filament deposition. This can be as a result of an poor printing operating condition. The first image 500a can be provided to the input layer of the further neural network. An output is calculated at the output layer of the further neural network, based at least in part on the input image. Additionally or alternatively, other sensory data relating to the printing process may also be used. The neural network is trained to provide the output linked or relating to at least one controlled deposition control parameter. Based at least in part on the output of the further neural network, the controller may evaluate whether adjustment of the at least one deposition control parameter resulted in expected printing results. As can be seen in the first images 500a, the filaments of the structure a deposited poorly, resulting in detrimental properties (e.g. insufficient porosity). For instance, the structure in the images 500a in figs. 9B and 9C have almost no porosity at its outer face. This evaluation can be used for further training the machine learning model used for adjusting the at least one deposition control parameter.

In figs. 9A-9D, the second image 500b of the scene of the structure represents an adequate printing operating condition obtained after adjustment the at least one deposition control parameter.

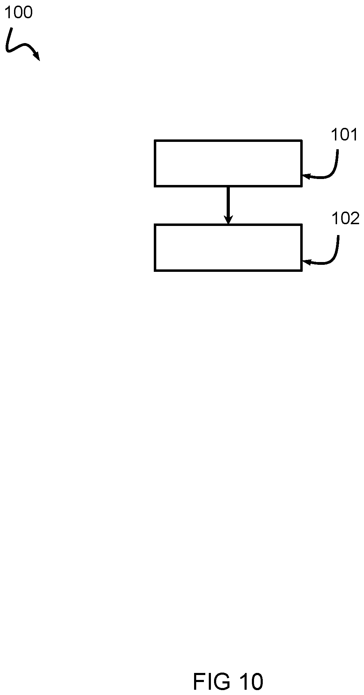

Fig. 10 shows a schematic diagram of a method 100, not falling within the scope of the claims, for controlling a system arranged for manufacturing a three-dimensional structure comprising interconnected filaments, the system including a deposition unit with at least one nozzle arranged for discharging build material, wherein the at least one nozzle has an opening area through which filaments are discharged, wherein the at least one nozzle is in fluid communication with a material reservoir arranged to hold build material, and wherein the system is configured to deposit filaments in a predetermined interconnected arrangement in a plurality of stacked layers for forming the structure, wherein the computer implemented method includes the following steps: in a first step 101, monitoring, by means of a sensor unit, at least during the printing operation, sensory data indicative of an actuation for performing deposition or sensory data indicative of at least one flow parameter of the build material; and in a second step 102, providing the sensory data as input to a trained machine learning model configured to generate an output relating to control of at least one deposition control parameter for maintaining a predetermined deposition flow rate during the printing operation, wherein the at least one deposition control parameter is adjusted during the printing operation based on the output of the trained machine learning model. At least one sensor of the sensor unit is arranged to monitor the sensory data at at least one location upstream of the nozzle opening area. Advantageously, an improved printing process can be obtained resulting in a better printing quality and/or printing efficiency.

In some examples, the system and/or method is employed for manufacturing one or more three-dimensional porous structures. The porous structure being formed may have interconnected pores. The claimed invention may enable significantly enhanced printing processes for manufacturing of such porous structures.

It will be appreciated that the method may include computer implemented steps. All above mentioned steps can be computer implemented steps. Embodiments may comprise computer apparatus, wherein processes performed in computer apparatus. The disclosure also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk drive, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

The graphics and/or image/video processing techniques may be implemented in various hardware architectures. Graphics functionality may be integrated within a chipset. Alternatively, a discrete graphics processor may be used. For example, processing of images (still or video) may be performed by a graphics subsystem such as a graphics processing unit (GPU) or a visual processing unit (VPU). As still another embodiment, the graphics or image/video processing functions may be implemented by a general purpose processor, including e.g. a multi-core processor. In a further embodiment, the functions may be implemented in a consumer electronics device. Embodiments, using a combination of different hardware architectures are possible.

In various embodiments, the controller can communicate using wireless systems, wired systems, or a combination of both. When implemented as a wired system, the system may include components and interfaces suitable for communicating or wired communications media, such as input/output (I/O) adapters, physical connectors to connect the I/O adapter with a corresponding wired communications medium. When implemented as a wireless system, the system may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. A wireless communication device may be included in order to transmit and receive signals using various suitable wireless communications techniques. Such techniques may involve communications across one or more wireless networks. Exemplary wireless networks include, but are not limited to, cellular networks, wireless local area networks (WLANs, cfr. WiFi), wireless personal area networks (WPANs), wireless metropolitan area network (WMANs), satellite networks, et cetera. In communicating across such networks, the transmitter may operate in accordance with one or more applicable standards in any version.

Herein, the invention is described with reference to specific examples of embodiments of the invention. It will, however, be evident that various modifications, variations, alternatives and changes may be made therein, without departing from the scope of the claims.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A system (1) for manufacturing a three-dimensional structure comprising interconnected filaments, the system (1) comprising:
a support (3);
a deposition unit (5) including at least one nozzle (7) arranged for discharging build material (9), wherein the at least one nozzle (7) has an opening area (11) through which filaments (13) are discharged, wherein the at least one nozzle (7) is in fluid communication with a material reservoir (15) arranged to hold build material (9), wherein the at least one nozzle (7) and the support (3) are relatively moveable with respect to each other;
a controller (17) configured to operate during a printing operation the at least one nozzle (7) for deposition of filaments (13) on the support (3) in a predetermined interconnected arrangement in a plurality of stacked layers;
a sensor unit (19) configured to monitor, at least during the printing operation, sensory data indicative of an actuation for performing deposition or sensory data indicative of at least one flow parameter of the build material; and
a trained machine learning model (21) configured to receive the sensory data as input, and to provide an output relating to control of at least one deposition control parameter for maintaining a predetermined deposition flow rate during the printing operation, and wherein the controller (17) is configured to adjust, based on the output of the trained machine learning model, the at least one deposition control parameter during the printing operation; and
wherein at least one sensor of the sensor unit (19) is arranged to monitor the sensory data at at least one location upstream of the nozzle opening area (11); and
wherein the sensor unit (19) includes a first pressure sensor (37) at a first location, and a second pressure sensor (23) at a second location, wherein the first location and the second location are different, and wherein the first pressure sensor (37) is arranged at the first location at the material reservoir (15), wherein the second pressure sensor (23) is arranged at a location further downstream with respect to the first location.

2. System according to claim 1, wherein the sensor unit (19) includes at least one pressure sensor configured to monitor pressure exhibited on the build material at the at least one location during the printing operation.

3. System according to claim 1 or 2, wherein the sensor unit (19) includes at least one flow sensor configured to monitor a flow rate of the build material at the at least one location during the printing operation.

4. System according to any one of the preceding claims, wherein the sensor unit (19) includes at least one force sensor configured to monitor an actuation force applied on the build material in the reservoir for accomplishing discharge of build material through the nozzle opening area (11) located further downstream.

5. System according to any one of the preceding claims, wherein the sensor unit (19) includes at least one sensor arranged at a fluid communication line between the material reservoir (15) and the nozzle opening area (11).

6. System according to any one of the preceding claims, wherein the deposition unit (5) includes a shutter (43) selectively operable for influencing flow of build material (9) through the nozzle opening area (11), wherein the sensor unit (19) includes at least one sensor arranged downstream of the shutter (43).

7. System according to any one of the preceding claims, wherein the deposition unit (5) includes a screw (41) configured to rotate for accomplishing extrusion of build material (9) through the nozzle opening area (11), wherein the sensor unit (19) includes at least one sensor arranged downstream of the screw (41).

8. System according to any one of the preceding claims, wherein the sensor unit (19) includes a plurality of sensors arranged at different locations inclusively between material reservoir (15) and the nozzle opening area (11).

9. System according to any one of the preceding claims, wherein the trained machine learning model (21) is trained to generate the output for maintaining the deposition flow rate in a predefined range.

10. System according to any one of the preceding claims, wherein the trained machine learning model (21) is trained to generate the output for maintaining the predetermined deposition flow rate.

11. System according to any one of the preceding claims, wherein the at least one deposition control parameter includes at least one of: an actuation force or pressure applied by the system for achieving deposition of the filaments (13), one or more additives added to the build material, a speed of an extrusion screw used for discharging build material (9), a size of an opening area through which build material is discharged, or a temperature to which the build material is heated for deposition, or ultrasonic vibrations and/or electromagnetic radiation applied on the build material for adjusting its rheological properties.

12. System according to any one of the preceding claims, wherein the sensor unit (19) includes one or more load sensors positioned at the material reservoir (15), between the material reservoir (15) and the nozzle (7), and/or at the nozzle (7), the one or more load sensors being configured to measure data indicative for pressure exhibited on the build material, wherein the system (1) is configured to process data provided by the one or more load sensors in order to determine data indicative of the flow rate of build material through the deposition unit, wherein the machine learning model (21) is configured to receive said data indicative of the flow rate of build material (9) through the deposition unit as input.

13. A method for controlling a system (1) arranged for manufacturing a three-dimensional structure comprising interconnected filaments, the system including a deposition unit with at least one nozzle arranged for discharging build material, wherein the at least one nozzle has an opening area through which filaments are discharged, wherein the at least one nozzle is in fluid communication with a material reservoir arranged to hold build material, and wherein the system is configured to deposit filaments in a predetermined interconnected arrangement in a plurality of stacked layers for forming the structure, wherein the computer implemented method includes the steps of:
monitoring, by means of a sensor unit (19), at least during the printing operation, sensory data indicative of an actuation for performing deposition or sensory data indicative of at least one flow parameter of the build material, and
providing the sensory data as input to a trained machine learning model (21) configured to generate an output relating to control of at least one deposition control parameter for maintaining a predetermined deposition flow rate during the printing operation, wherein the at least one deposition control parameter is adjusted during the printing operation based on the output of the trained machine learning model,
wherein at least one sensor of the sensor unit (19) is arranged to monitor the sensory data at at least one location upstream of the nozzle opening area; and
wherein the sensor unit (19) is provided with a first pressure sensor (37) at a first location, and a second pressure sensor (23) at a second location, wherein the first location and the second location are different, and wherein the first pressure sensor (37) is arranged at a first location at the material reservoir, wherein the second pressure sensor (23) is arranged at a location further downstream with respect to the first location.

## Patentansprüche

1. System (1) zur Herstellung einer dreidimensionalen Struktur, die miteinander verbundene Filamente umfasst, wobei das System (1) Folgendes umfasst:
einen Träger (3);
eine Abscheideeinheit (5) mit mindestens einer Düse (7), die zum Ausstoßen von Baumaterial (9) angeordnet ist, wobei die mindestens eine Düse (7) einen Öffnungsbereich (11) aufweist, durch den Filamente (13) ausgestoßen werden, wobei die mindestens eine Düse (7) in Fluidverbindung mit einem Materialreservoir (15) steht, das zur Aufnahme von Baumaterial (9) angeordnet ist, wobei die mindestens eine Düse (7) und der Träger (3) relativ zueinander beweglich sind;
eine Steuerung (17), die dazu konfiguriert ist, während eines Druckvorgangs die mindestens eine Düse (7) zur Abscheidung von Filamenten (13) auf dem Träger (3) in einer vorbestimmten, miteinander verbundenen Anordnung in einer Vielzahl von gestapelten Schichten zu betreiben;
eine Sensoreinheit (19), die dazu konfiguriert ist, zumindest während des Druckvorgangs Sensordaten, die eine Betätigung zum Durchführen einer Abscheidung angeben, oder Sensordaten, die mindestens einen Fließparameter des Baumaterials angeben, zu überwachen; und
ein trainiertes maschinelles Lernmodell (21), das dazu konfiguriert ist, die Sensordaten als Eingabe zu empfangen und eine Ausgabe bereitzustellen, die sich auf die Steuerung mindestens eines Abscheidungssteuerparameters bezieht, um eine vorbestimmte Abscheidungsflussrate während des Druckvorgangs aufrechtzuerhalten, und wobei die Steuerung (17) dazu konfiguriert ist, basierend auf der Ausgabe des trainierten maschinellen Lernmodells den mindestens einen Abscheidungssteuerparameter während des Druckvorgangs anzupassen; und
wobei mindestens ein Sensor der Sensoreinheit (19) angeordnet ist, um die Sensordaten an mindestens einer Position stromaufwärts des Düsenöffnungsbereichs (11) zu überwachen; und
wobei die Sensoreinheit (19) einen ersten Drucksensor (37) an einer ersten Position und einen zweiten Drucksensor (23) an einer zweiten Position enthält, wobei die erste Position und die zweite Position unterschiedlich sind und wobei der erste Drucksensor (37) an der ersten Position an dem Materialreservoir (15) angeordnet ist, wobei der zweite Drucksensor (23) an einer Position weiter stromabwärts in Bezug auf die erste Position angeordnet ist.

2. System nach Anspruch 1, wobei die Sensoreinheit (19) mindestens einen Drucksensor enthält, der dazu konfiguriert ist, den an dem Baumaterial an der mindestens einen Position während des Druckvorgangs auftretenden Druck zu überwachen.

3. System nach Anspruch 1 oder 2, wobei die Sensoreinheit (19) mindestens einen Durchflusssensor enthält, der dazu konfiguriert ist, eine Durchflussrate des Baumaterials an der mindestens einen Position während des Druckvorgangs zu überwachen.

4. System nach einem der vorstehenden Ansprüche, wobei die Sensoreinheit (19) mindestens einen Kraftsensor enthält, der dazu konfiguriert ist, eine auf das Baumaterial in dem Reservoir ausgeübte Betätigungskraft zu überwachen, um eine Abgabe von Baumaterial durch den Düsenöffnungsbereich (11) zu erreichen, der weiter stromabwärts angeordnet ist.

5. System nach einem der vorstehenden Ansprüche, wobei die Sensoreinheit (19) mindestens einen Sensor enthält, der an einer Fluidverbindungsleitung zwischen dem Materialreservoir (15) und dem Düsenöffnungsbereich (11) angeordnet ist.

6. System nach einem der vorstehenden Ansprüche, wobei die Abscheideeinheit (5) einen Verschluss (43) enthält, der selektiv betreibbar ist, um den Fluss des Baumaterials (9) durch den Düsenöffnungsbereich (11) zu beeinflussen, wobei die Sensoreinheit (19) mindestens einen Sensor enthält, der stromabwärts des Verschlusses (43) angeordnet ist.

7. System nach einem der vorstehenden Ansprüche, wobei die Abscheideeinheit (5) eine Schraube (41) enthält, die zum Drehen konfiguriert ist, um eine Extrusion von Baumaterial (9) durch den Düsenöffnungsbereich (11) zu erreichen, wobei die Sensoreinheit (19) mindestens einen Sensor enthält, der stromabwärts der Schraube (41) angeordnet ist.

8. System nach einem der vorstehenden Ansprüche, wobei die Sensoreinheit (19) eine Vielzahl von Sensoren enthält, die an verschiedenen Positionen angeordnet sind, einschließlich zwischen dem Materialreservoir (15) und dem Düsenöffnungsbereich (11).

9. System nach einem der vorstehenden Ansprüche, wobei das trainierte maschinelle Lernmodell (21) darauf trainiert ist, die Ausgabe zum Aufrechterhalten der Abscheidungsflussrate in einem vordefinierten Bereich zu erzeugen.

10. System nach einem der vorstehenden Ansprüche, wobei das trainierte maschinelle Lernmodell (21) darauf trainiert ist, die Ausgabe zum Aufrechterhalten der vorbestimmten Abscheidungsflussrate zu erzeugen.

11. System nach einem der vorstehenden Ansprüche, wobei der mindestens eine Abscheidungssteuerparameter mindestens eines von Folgendem enthält: eine Betätigungskraft oder ein Betätigungsdruck, die bzw. der durch das System zum Erzielen einer Abscheidung der Filamente (13) aufgebracht wird, ein oder mehrere dem Baumaterial hinzugefügte Additive, eine Geschwindigkeit einer Extrusionsschraube, die zum Abgeben von Baumaterial (9) verwendet wird, eine Größe eines Öffnungsbereichs, durch den Baumaterial abgegeben wird, oder eine Temperatur, auf die das Baumaterial für eine Abscheidung erhitzt wird, oder Ultraschallschwingungen und/oder elektromagnetische Strahlung, die auf das Baumaterial aufgebracht werden, um dessen rheologische Eigenschaften anzupassen.

12. System nach einem der vorstehenden Ansprüche, wobei die Sensoreinheit (19) einen oder mehrere Lastsensoren enthält, die an dem Materialreservoir (15), zwischen dem Materialreservoir (15) und der Düse (7) und/oder an der Düse (7) positioniert sind, wobei der eine oder die mehreren Lastsensoren dazu konfiguriert sind, Daten zu messen, die für den auf das Baumaterial ausgeübten Druck indikativ sind, wobei das System (1) dazu konfiguriert ist, Daten zu verarbeiten, die von dem einen oder den mehreren Lastsensoren bereitgestellt werden, um Daten zu bestimmen, die für die Durchflussrate von Baumaterial durch die Abscheideeinheit indikativ sind, wobei das maschinelle Lernmodell (21) dazu konfiguriert ist, die für die Durchflussrate von Baumaterial (9) durch die Abscheideeinheit indikativen Daten als Eingabe zu empfangen.

13. Verfahren zum Steuern eines Systems (1), das zur Herstellung einer dreidimensionalen Struktur, umfassend miteinander verbundene Filamente, angeordnet ist, wobei das System eine Abscheideeinheit mit mindestens einer Düse enthält, die zum Abgeben von Baumaterial angeordnet ist, wobei die mindestens eine Düse einen Öffnungsbereich aufweist, durch den Filamente abgegeben werden, wobei die mindestens eine Düse in Fluidverbindung mit einem Materialreservoir steht, das zur Aufnahme von Baumaterial angeordnet ist, und wobei das System dazu konfiguriert ist, Filamente in einer vorbestimmten, miteinander verbundenen Anordnung in einer Vielzahl von gestapelten Schichten zum Bilden der Struktur abzuscheiden, wobei das computerimplementierte Verfahren folgende Schritte enthält:
Überwachen, mittels einer Sensoreinheit (19), zumindest während des Druckvorgangs, von Sensordaten, die eine Betätigung zum Durchführen einer Abscheidung angeben, oder von Sensordaten, die mindestens einen Fließparameter des Baumaterials angeben, und
Bereitstellen der Sensordaten als Eingabe an ein trainiertes maschinelles Lernmodell (21), das dazu konfiguriert ist, eine Ausgabe zu erzeugen, die sich auf die Steuerung mindestens eines Abscheidungssteuerparameters bezieht, um eine vorbestimmte Abscheidungsflussrate während des Druckvorgangs aufrechtzuerhalten, wobei der mindestens eine Abscheidungssteuerparameter während des Druckvorgangs basierend auf der Ausgabe des trainierten maschinellen Lernmodells angepasst wird,
wobei mindestens ein Sensor der Sensoreinheit (19) angeordnet ist, um die Sensordaten an mindestens einer Position stromaufwärts des Düsenöffnungsbereichs zu überwachen; und
wobei die Sensoreinheit (19) mit einem ersten Drucksensor (37) an einer ersten Position und einem zweiten Drucksensor (23) an einer zweiten Position bereitgestellt ist, wobei die erste Position und die zweite Position unterschiedlich sind und wobei der erste Drucksensor (37) an der ersten Position an dem Materialreservoir angeordnet ist, wobei der zweite Drucksensor (23) an einer Position weiter stromabwärts in Bezug auf die erste Position angeordnet ist.

## Revendications

1. Système (1) pour fabriquer une structure tridimensionnelle comprenant des filaments interconnectés, le système (1) comprenant :
un support (3) ;
une unité de dépôt (5) comportant au moins une buse (7) agencée pour décharger un matériau de fabrication (9), dans laquelle ladite au moins une buse (7) a une zone d'ouverture (11) à travers laquelle des filaments (13) sont déchargés, dans laquelle ladite au moins une buse (7) est en communication fluide avec un réservoir à matériau (15) agencé pour contenir un matériau de fabrication (9), dans laquelle ladite au moins une buse (7) et le support (3) sont relativement mobiles l'un par rapport à l'autre ;
un contrôleur (17) configuré pour faire fonctionner pendant une opération d'impression ladite au moins une buse (7) pour le dépôt de filaments (13) sur le support (3) dans un agencement interconnecté prédéterminé en une pluralité de couches empilées ;
une unité de capteur (19) configurée pour surveiller, au moins pendant l'opération d'impression, des données sensorielles représentant un actionnement pour réaliser un dépôt ou des données sensorielles représentant au moins un paramètre d'écoulement du matériau de fabrication ; et
un modèle d'apprentissage automatique entraîné (21) configuré pour recevoir les données sensorielles en entrée, et pour fournir une sortie se rapportant à la commande d'au moins un paramètre de commande de dépôt pour maintenir un débit de dépôt prédéterminé pendant l'opération d'impression, et dans lequel le contrôleur (17) est configuré pour ajuster, en fonction de la sortie du modèle d'apprentissage automatique entraîné, ledit au moins un paramètre de commande de dépôt pendant l'opération d'impression ; et
dans lequel au moins un capteur de l'unité de capteur (19) est agencé pour surveiller les données sensorielles en au moins un endroit en amont de la zone d'ouverture de buse (11) ; et
dans lequel l'unité de capteur (19) comprend un premier capteur de pression (37) en un premier endroit, et un deuxième capteur de pression (23) en un deuxième endroit, dans lequel le premier endroit et le deuxième endroit sont différents, et dans lequel le premier capteur de pression (37) est placé au premier endroit au niveau du réservoir à matériau (15), dans lequel le deuxième capteur de pression (23) est placé en un endroit situé plus en aval par rapport au premier endroit.

2. Système selon la revendication 1, dans lequel l'unité de capteur (19) comprend au moins un capteur de pression configuré pour surveiller la pression exercée sur le matériau de fabrication audit au moins un endroit pendant l'opération d'impression.

3. Système selon la revendication 1 ou 2, dans lequel l'unité de capteur (19) comprend au moins un capteur de débit configuré pour surveiller un débit du matériau de fabrication audit au moins un endroit pendant l'opération d'impression.

4. Système selon l'une quelconque des revendications précédentes, dans lequel l'unité de capteur (19) comprend au moins un capteur de force configuré pour surveiller une force d'actionnement appliquée au matériau de fabrication dans le réservoir pour réaliser l'expulsion du matériau de fabrication par la zone d'ouverture de buse (11) située plus en aval.

5. Système selon l'une quelconque des revendications précédentes, dans lequel l'unité de capteur (19) comprend au moins un capteur placé sur une ligne de communication de fluide entre le réservoir à matériau (15) et la zone d'ouverture de buse (11).

6. Système selon l'une quelconque des revendications précédentes, dans lequel l'unité de dépôt (5) comporte un obturateur (43) pouvant être actionné sélectivement pour régler l'écoulement de matériau de fabrication (9) à travers la zone d'ouverture de buse (11), dans lequel l'unité de capteur (19) comprend au moins un capteur placé en aval de l'obturateur (43).

7. Système selon l'une quelconque des revendications précédentes, dans lequel l'unité de dépôt (5) comporte une vis (41) configurée pour tourner pour réaliser l'extrusion de matériau de fabrication (9) à travers la zone d'ouverture de buse (11), dans lequel l'unité de capteur (19) comprend au moins un capteur placé en aval de la vis (41).

8. Système selon l'une quelconque des revendications précédentes, dans lequel l'unité de capteur (19) comprend une pluralité de capteurs placés en différents endroits de façon inclusive entre le réservoir à matériau (15) et la zone d'ouverture de buse (11).

9. Système selon l'une quelconque des revendications précédentes, dans lequel le modèle d'apprentissage automatique entraîné (21) est entraîné pour générer la sortie afin de maintenir le débit de dépôt dans une plage prédéfinie.

10. Système selon l'une quelconque des revendications précédentes, dans lequel le modèle d'apprentissage automatique entraîné (21) est entraîné pour générer la sortie afin de maintenir le débit de dépôt prédéterminé.

11. Système selon l'une quelconque des revendications précédentes, dans lequel ledit au moins un paramètre de commande de dépôt comprend au moins un élément parmi : une force ou pression d'actionnement appliquée par le système pour réaliser le dépôt des filaments (13), un ou plusieurs additifs ajoutés au matériau de fabrication, une vitesse d'une vis d'extrusion utilisée pour décharger le matériau de fabrication (9), une taille d'une zone d'ouverture par laquelle le matériau de fabrication est déchargé, une température à laquelle le matériau de fabrication est chauffé pour le dépôt, et des vibrations ultrasonores et/ou un rayonnement électromagnétique appliqué(es) au matériau de fabrication pour ajuster ses propriétés rhéologiques.

12. Système selon l'une quelconque des revendications précédentes, dans lequel l'unité de capteur (19) comprend un ou plusieurs capteurs de charge positionnés au niveau du réservoir à matériau (15), entre le réservoir à matériau (15) et la buse (7), et/ou au niveau de la buse (7), lesdits un ou plusieurs capteurs de charge étant configurés pour mesurer des données représentant la pression exercée sur le matériau de fabrication, dans lequel le système (1) est configuré pour traiter des données fournies par lesdits un ou plusieurs capteurs de charge afin de déterminer des données représentant le débit de matériau de fabrication dans l'unité de dépôt, dans lequel le modèle d'apprentissage automatique (21) est configuré pour recevoir en entrée lesdites données représentant le débit de matériau de fabrication (9) dans l'unité de dépôt.

13. Procédé pour commander un système (1) agencé pour fabriquer une structure tridimensionnelle comprenant des filaments interconnectés, le système comprenant une unité de dépôt comportant au moins une buse agencée pour décharger un matériau de fabrication, dans laquelle ladite au moins une buse a une zone d'ouverture à travers laquelle des filaments sont déchargés, dans laquelle ladite au moins une buse est en communication fluide avec un réservoir à matériau agencé pour contenir un matériau de fabrication, et dans lequel le système est configuré pour déposer des filaments dans un agencement interconnecté prédéterminé en une pluralité de couches empilées pour former la structure, dans lequel le procédé informatique comprend les étapes suivantes :
surveiller, au moyen d'une unité de capteur (19), au moins pendant l'opération d'impression, des données sensorielles représentant un actionnement pour réaliser un dépôt ou des données sensorielles représentant au moins un paramètre d'écoulement du matériau de fabrication, et
fournir les données sensorielles en entrée à un modèle d'apprentissage automatique entraîné (21) configuré pour générer une sortie se rapportant à la commande d'au moins un paramètre de commande de dépôt pour maintenir un débit de dépôt prédéterminé pendant l'opération d'impression, dans lequel ledit au moins un paramètre de commande de dépôt est ajusté pendant l'opération d'impression en fonction de la sortie du modèle d'apprentissage automatique entraîné,
dans lequel au moins un capteur de l'unité de capteur (19) est agencé pour surveiller les données sensorielles en au moins un endroit en amont de la zone d'ouverture de buse ; et
dans lequel l'unité de capteur (19) est pourvue d'un premier capteur de pression (37) en un premier endroit, et d'un deuxième capteur de pression (23) en un deuxième endroit, dans lequel le premier endroit et le deuxième endroit sont différents, et dans lequel le premier capteur de pression (37) est placé au premier endroit au niveau du réservoir à matériau, dans lequel le deuxième capteur de pression (23) est placé en un endroit situé plus en aval par rapport au premier endroit.
